# EUROPÄISCHE PATENTSCHRIFT

(11) **EP 1 397 952 B1**
(45) Veröffentlichungstag und Bekanntmachung des Hinweises auf die Patenterteilung: **08.08.2007**
(21) Anmeldenummer: 03019129.0
(22) Anmeldetag: 23.08.2003
(51) Int. Cl.: A01D 61/00, B02C 4/30

(54) **Einrichtung zum Absorbieren von Schwingungen in einer landwirtschaftlichen Erntemaschine**
Device for absorbing vibrations in an agricultural harvesting machine
Appareil pour amortir des vibrations dans une moissoneuse agricole

(30) Priorität: 11.09.2002 DE 10242579
(43) Veröffentlichungstag der Anmeldung: 17.03.2004
(73) Patentinhaber: CLAAS Selbstfahrende Erntemaschinen GmbH, 33428 Harsewinkel (DE)
(72) Erfinder: Isfort, Heinrich, 48249 Dülmen (DE)

(56) Entgegenhaltungen:
- WO-A-95/33932
- DE-A- 19 844 894

## Beschreibung

Die Erfindung betrifft eine Einrichtung an einer landwirtschaftlichen Erntemaschine zum Absorbieren von auftretenden Schwingungen an zusammenwirkenden Erntegutbearbeitungs- und/oder Fördereinrichtungen, wobei die Erntegutbearbeitungsund/oder Fördereinrichtungen auf zumindest einer Welle gelagert und von wenigstens einem Walzenmantel umgeben sind.

Während des Erntevorgangs werden nicht nur das Erntegut, sondern auch feste Fremdkörper von den Einzugsorganen der landwirtschaftlichen Erntemaschine aufgenommen und entlang der Arbeitsorgane durch die Erntemaschine gefördert. Durch den Kontakt und das harte Aufprallen der festen Fremdkörper an den Organen, wie beispielsweise den Corn - Cräcker Walzen, können diese erhebliche Schäden erfahren die den weiteren Ernteprozess beeinträchtigen.

In der DE 198 44 894 A1 wird von einer Verstelleinrichtung für eine landwirtschaftliche Erntemaschine ausgegangen, bei der der Erntegutdurchgangsspalt zwischen zusammenwirkenden Corn - Cräcker Walzen veränderbar ist. Die zugrundegelegte Aufgabe ist hierbei eine konstruktiv einfache Ausführung der Verstelleinrichtung sowie die schnelle und genaue Durchführung der Verstellung zwischen den Maschinenteilen oder Baugruppen innerhalb der Förderstrecke zu erreichen. Dies soll dadurch ermöglicht werden, dass Anschläge in durch ein Fluid beaufschlagbare und im Gleichlauf bewegbare Zylindern geführte Stößel geführt sind. Die Steuerung erfolgt hierbei durch eine Mehrkammerkolbenpumpe, die strömungsfähig mit den Zylindern verbunden ist. Nachteil der in der DE 198 44 894 A1 offenbarten Ausführung ist eine langsamere Signalweitergabe aufgrund Erntegutveränderungen die zu der erforderlichen Reaktion der Organe führt. Zudem können ausschließlich Grobvibrationen und nicht auch Feinvibrationen erfasst werden.

Der vorliegenden Erfindung liegt demgemäss die Aufgabe zugrunde, eine Einrichtung zur Absorption zu entwickeln, die kostengünstig herstellbar ist und noch unmittelbarer auf Erntegutstromveränderungen reagiert, wobei neben hohen auch niedrige erntegutbedingte Krafteinwirkungen gedämpft werden.

Diese Aufgabe wird erfindungsgemäß durch die Merkmale des Patentanspruchs 1 gelöst, wobei in den weiteren Patentansprüchen Merkmale aufgeführt sind, die diese Lösung in vorteilhafter Weise fortbilden.

Indem der Erntegutbearbeitungs- und/oder Fördereinrichtung zumindest eine Feinabsorptionseinrichtung zugeordnet ist, wird sichergestellt, dass noch unmittelbarer auf Erntegutstromveränderungen reagiert werden kann, wobei sowohl hohe als auch niedrige erntegutbedingte Krafteinwirkungen gedämpft werden können.
Diese entstehen aufgrund unterschiedlicher Erntegutmassen die während des gesamten Erntevorgangs die Erntegutbearbeitungs- und Fördereinrichtungen direkt beaufschlagen. Die Feinvibrationen wirken nicht nur auf die unmittelbar betroffenen Organe ein, sondern setzen sich an den anschließenden Organen innerhalb der Erntemaschine fort. Darüber hinaus können feste Fremdkörper erhebliche Schäden an den beispielsweise Corn - Cräcker Walzen verursachen, insbesondere wenn die Bewegungsfreiheit und Ausweichmöglichkeit der Walzen eingeschränkt bzw. nicht vorhanden ist. Aus diesem Grund ist auch ein stetiges Ausweichen der Walzen erforderlich. Insbesondere werden hiermit die während des gesamten Erntevorgangs entstehenden Feinvibrationen ununterbrochen absorbiert, ohne dass es hierdurch zu weiteren Beeinträchtigungen kommt. Wesentlicher Vorteil gegenüber dem Stand der Technik ist die Absorption von Feinvibrationen, die außerhalb des Wirkbereichs der großer Federpakete kommerzieller Federsystemen liegt. Die in der DE 198 44 894 A1 offenbarten Federpakete fangen lediglich Belastungen ab einer bestimmten einstellbaren Stärke ab. Darunter liegende mindere Vibrationen, die sich insbesondere schädlich auf die Lager auswirken, können nicht mehr erfasst werden. Bei der zugrundeliegenden Erfindung werden genau diese feinen Erschütterungen bereits innerhalb der Walzenkörper während des gesamten Erntevorgangs abgefangen.

Damit die Erfindung am effizientesten eingesetzt werden kann, umschließt die Feinabsorptionseinrichtung die Antriebswelle der Erntegutbearbeitungs- und/oder Fördereinrichtung. Somit werden die Vibrationen gleichmäßig und an jeder auftretenden Stelle unmittelbar aufgenommen bevor sie an die Antriebswelle gelangen oder an umliegende Organe weitergeleitet werden können.

Aufgrund der Verstellung, die die Erntegutbearbeitungs- und/oder Fördereinrichtung durch die Feinabsorptionseinrichtung in Abhängigkeit von der Dichte, Struktur und/oder des Durchsatzes erfährt, passen sich die Organe der ständig wechselnden Erntegutmasse und dem Durchqueren kleinerer fester Fremdkörper innerhalb des Kanals an. Damit werden die Walzen der Erntegutbearbeitungs- und/oder Fördereinrichtung weniger stark beansprucht und der Verschleiß ist entsprechend geringer. Die Einstellung erfolgt selbsttätig aufgrund der beweglichen Lagerung. Demnach bedarf es keines manuellen und zeitaufwendigen Verstellens.

Eine vorteilhafte Weiterbildung der erfindungsgemäßen Einrichtung wird dann erreicht, wenn die Feinabsorptionseinrichtung durch wenigstens ein aus elastischem Material bestehendes Dämpfungselement gebildet wird. Hiermit wird gewährleistet, dass bei Ernteguterhöhung durch Verdichtung oder bei Erntegutverringerung durch Ausdehnung die Feinabsorptionseinrichtung unmittelbar auf die ständig wechselnde Erntegutmenge reagiert und die Vibrationen aufnimmt ohne sie weiterzuleiten.
Gleichzeitig wird auf den Erntegutdurchgangsspalt zwischen den Walzen der Erntegutbearbeitungs- und/oder Fördeeinrichtung eingewirkt. Dies bedeutet, dass sich der Erntegutdurchgangsspalt bei erhöhter Erntegutmasse vergrößert und bei geringerer Masse verkleinert. Damit wird erreicht, dass sich die Größe des Erntegutspalts den aktuellen Belastungen und Veränderungen selbsttätig anpasst.

Indem das Dämpfungselement in unterschiedlichen Ausführungen ausgebildet sein kann, wie beispielsweise unterschiedlichen Kunststoffarten, mit oder ohne eingearbeitete Armierungen, kann die Feinabsorptionseinrichtung an die durch die verschiedenen Belastungen hervorgerufenen unterschiedlich starken Vibrationen angepasst werden. Insbesondere kann das Dämpfungselement gegen andere Dämpfungselemente beliebig ausgetauscht werden. Da abhängig von den Erntebedingungen unterschiedlich starke Vibrationen auftreten können, werden unterschiedlich starke Dämpfungselemente benötigt.

Um sämtliche Vibrationen aufzufangen ist das Dämpfungselement - wie die gesamte Feinabsorptionseinrichtung - ringförmig ausgestaltet und zwischen der Antriebswelle der Organe und dem dazugehörigen Mantel angeordnet. Durch diese Anordnung wird die gesamte Antriebswelle des betroffenen Organs formschlüssig umgeben und vor den auftretenden Vibrationen geschützt. Eine Weiterleitung an die nachfolgenden Organe wird verhindert. Schließlich werden die Vibrationen gleichmäßiger aufgenommen.

Dadurch, dass das Dämpfungselement zwischen Antriebswelle und Walzenmantel geschaltet ist, müssen die von dem Walzenmantel ausgehenden Vibrationen zunächst das Dämpfungselement durchlaufen. Somit werden diese unmittelbar nach ihrer Entstehung aufgefangen ohne zur Antriebswelle durchzudringen.

Platzsparend und auf konstruktiv einfache Weise kann das Dämpfungselement in die bereits vorhandenen Verbindungselemente der Bearbeitungsorgane austauschbar integriert werden. Eine den Energiebedarf erhöhende nennenswerte Gewichtszunahme erfolgt nicht. Zudem kann der Wechsel der Dämpfungselemente einfach, kostengünstig und zeitsparend erfolgen.

Weiterer Vorteil ist der geringe und kostengünstige Wartungsaufwand. Bei Verschleiß muss lediglich das Dämpfungselement ausgetauscht werden.

Daneben führt das elastische Material zu einer den Fahrer entlastenden Geräuschreduzierung. Die teilweise sehr lauten Geräusche werden durch feste Fremdkörper verursacht, die an die Organe schlagen. Der hierdurch erzeugte Körperschall wird bis in die Fahrerkabine weitergeleitet.
Ebenso werden die Kugellager entlastet, die aufgrund der elastischen Federung die Stoßbelastungen nur noch in abgedämpfter Form erfahren.

In vorteilhafter Weiterbildung der Erfindung kann neben der Feinabsorptionseinrichtung eine weitere Grobabsorptionseinrichtung den Organen zugeordnet werden. Diese Grobabsorptionseinrichtung wirkt unterstützend und schonend auf die erfindungsgemäße Feinabsorptionseinrichtung, da von ihr erhöhte Vibrationen vorab gedämpft werden und danach an die Feinabsorptionseinrichtung in geminderter Form weitergegeben werden.

Weitere vorteilhafte Ausgestaltungen sind Gegenstand weiterer Unteransprüche und werden nachfolgend an Hand von Zeichnungen näher erläutert.

Im folgenden wird die Erfindung anhand eines in Zeichnungen dargestellten Ausführungsbeispiels näher beschrieben. Es zeigen:
- Figur 1: die erfindungsgemäße Feinabsorptionseinrichtung in Verbindung mit einem Cräckerwalzenpaar eines Feldhäckslers in Seitenansicht
- Figur 2: einen Schnitt nach der Linie II-II der Figur 3
- Figur 3: einen Schnitt nach der Linie IV - IV in der Figur 2

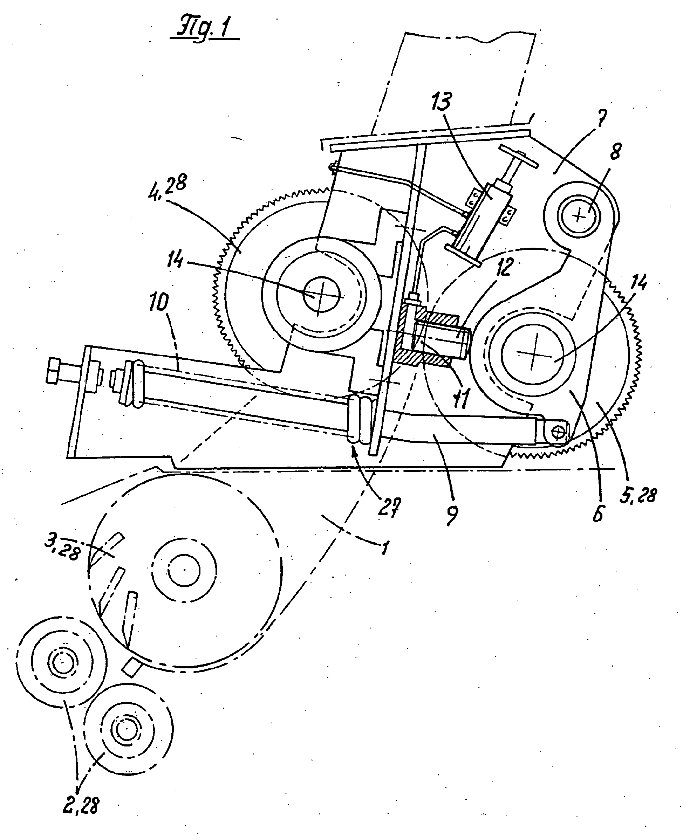

Die Figur 1 stellt in Seitenansicht einen Teilbereich eines Feldhäckslers dar. Das nicht dargestellte Erntegut durchquert den Förderkanal 1 in Pfeilrichtung. Hierbei wird es von den Einzugs- und Vorpresswalzen 2 verdichtet und an die Häckseltrommel 3 zum Zerkleinern übergeben. Danach wird es von den gegensinnig angetriebenen Corn - Cräckerwalzen 4 und 5 angenommen, von diesen angeschlagen und an den nicht abgebildeten nachfolgend angeordneten Nachbeschleuniger übergeben. Damit erfüllen die Corn - Cräckerwalzen 4, 5 die Funktion, das Erntegut zu bearbeiten und weiterzufördern. Das Anschlagen ist insbesondere bei Mais erforderlich, um den Mais als Futtermittel aufzubereiten. Die Corn - Cräckerwalze 4 ist ortsfest mit dem nicht dargestellten Rahmen des Feldhäckslers verbunden. Die Corn - Cräckerwalze 5 ist beidseitig beweglich in Schwingen 6 gelagert, die an dem Gehäuse 7 der CornCräckerwalzen 4, 5 angelenkt ist. Hierdurch wird die horizontale Verschwenkung um die Achse 8 ermöglicht. Die Schwingen 6 stehen beidseitig in Wirkverbindung mit den Zugstangen 9. Diese Zugstangen 9 stehen wiederum in Wirkverbindung mit der Zugfedern 10. Die Zugstangen 9 dienen der Anlenkung der Schwingen 6, wobei die Zugfedern 10 die Funktion haben, sehr starke Schläge, die auf die Corn - Cräckerwalzen 4, 5 wirken, auszugleichen. Dies erfolgt dadurch, dass die Zugfedern 10 mit den Zugstangen 9 in Wirkverbindung stehen und die Zugstangen 9 an die Schwingen 6 der verschwenkbaren Corn - Cräckerwalze 5 angelenkt sind. Erfährt nun die verschwenkbare Corn - Cräckerwalze 5 einen Schlag durch einen festen Gegenstand, so weicht sie in Wirkrichtung der Kraft aus, wobei die dabei auftretenden Stoßbelastungen über die Zugstangen 9 an die Zugfedern 10 weitergeleitet und von den Zugfedern 10 abgefangen werden.
Zudem wirkt die Zugfeder 10 regulierend auf den Durchgangsspalt 11 ein. Der Durchgangsspalt 11 ist der Spalt innerhalb des Förderkanals 1, den die einzelnen Corn - Cräckerwalzen 4, 5 zueinander bilden und den das gesamte zuvor bearbeitete Erntegut durchläuft. Zwischen den Corn - Cräcker Walzen 4, 5 sind in an sich bekannter Weise zwei Stößel 12 angeordnet, die in Wirkverbindung mit einer Einrichtung 13 stehen und die die Anschläge für die verschwenkbaren Corn - Cräcker Walzen 5 bilden. Insgesamt erlaubt diese Anordnung bei Durchsatzänderungen und dem Durchströmen von festen größeren Fremdkörpern innerhalb des Förderkanals 1 ein Ausweichen der verschwenkbaren Corn - Cräckerwalze 5 und trägt zur Entlastung der Corn - Cräckerwalzen 4, 5 bei.

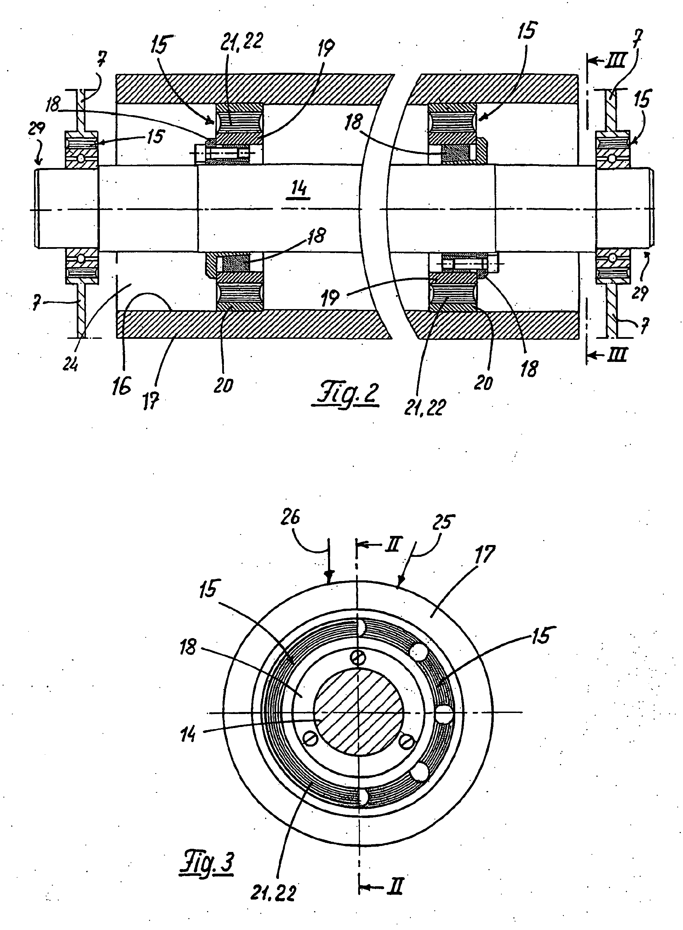

Figur 2 zeigt in Schnittdarstellung eine Corn - Cräckerwalze 4, 5 in Seitenansicht. Die Corn - Cräckerwalze 4 ist auf einer Antriebswelle 14 gelagert. Im vorliegenden Ausführungsbeispiel ist die Antriebswelle 14 außenseitig von zwei erfindungsgemäße Feinabsorptionseinrichtungen 15 umschlossen. Die Feinabsorptionseinrichtungen 15 sind fest mit der Innenfläche 16 des Corn - Cräckermantels 17 verbunden. Das an sich bekannte Klemmelement 18 stellt die feste Verbindung zur Antriebswelle 14 her und wird unmittelbar auf der Antriebswelle 14 fixiert. Die Fixierung der Feinabsorptionseinrichtung 15 erfolgt in an sich bekannter Weise mittels gegeneinander verschraubarer Klemmelemente 18. Zwischen der Antriebswelle 14 und der Innenfläche 16 des Walzenmantels 17 der Corn - Cräckerwalze 4 ist die Feinabsorptionseinrichtung 15 zwischengeschaltet. Die Feinabsorptionseinrichtung 15 besteht aus einem dem Klemmelement 18 nachgeordneten Innenring 19 und einen an der Innenfläche 16 des Walzenmantels 17 der Corn - Cräckerwalze 4 anliegenden Außenring 20. Alternativ hierzu kann der Innenring 19 der Feinabsorptionseinrichtung 15 direkt durch Schrumpfen mit der Antriebswelle 14 verbunden sein. Der Außenring 20 ist in einen Teilbereich der Innenfläche 16 des Corn - Cräckermantels 17 drehfest eingesetzt.

Dem Außenring 20 und dem Innenring 19 ist ein Dämpfungselement 21 zwischengeschaltet.
Dieses Dämpfungselement 21 besteht aus elastischem Material 22. Wahlweise kann hierfür unterschiedliches elastisches Material 22 verwendet werden, damit auf diesem Weg die Dämpfungselemente 21 auf die unterschiedlichen Erntebedingungen angepasst werden können. Ein härteres elastisches Material 22 fängt weniger Schwingungen ab und kann erfahrungsgemäß bei weicherem Erntegut einsetzt werden, da das Erntegut selbst ausweicht. Das weichere elastische Material 22 ist hingegen bei härterem Erntegut geeignet, welches ein Ausweichen der Corn - Cräckerwalze 5 erforderlich macht.
Um eine gleichmäßige Vibrationsaufnahme und -verteilung zu gewährleisten ist das Dämpfungselement 21 ringförmig ausgebildet. Das heißt, es umschließt den Innenring 19 insgesamt und liegt ebenso formschlüssig an dem Außenring 20 an. In Abhängigkeit von den Erntebedingungen kann auch hier das Dämpfungselement 21 einteilig oder mehrteilig ausgebildet sein, um die Vibrationen bestmöglich aufzufangen.
Besonders platz- und gewichtssparend wirkt sich die Integration des Dämpfungselements 21 in die Verbindungselemente des Walzenkorpus 24 aus. Hierzu bedarf es lediglich des Integrierens der Dämpfungselemente 21 in die bereits vorhandenen Verbindungselemente. Die Verbindungselemente in ihrer Zusammensetzung mit den Dämpfungselementen 21 bilden dann insgesamt eine einheitliche Feinabsorptionseinrichtung 15.

In vorteilhafter Weiterbildung der Erfindung kann die Feinabsorptionseinrichtung 15 auch in den Endbereichen 29 der Antriebswelle 14 zwischen den Lagerstellen 30 der Corn - Cräckerwalze 4, 5 und dem Gehäuse 7 der Corn - Cräckerwalze 4, 5 angeordnet sein. Auch hier wird die Antriebswelle 14 von der Feinabsorptionseinrichtung 15 umschlossen und steht in Wirkverbindung mit dem Gehäuse 7. Die von der Corn
- Cräckerwalze 4, 5 nur teilweise absorbierten und weitergeleiteten Schwingungen werden damit zusätzlich erfasst.

Aus der Figur 3 ergibt sich eine Querschnittdarstellung einer Corn - Cräckerwalze 4, 5 mitsamt Feinabsorptionseinrichtung 15. Auf der Teilseite 25 der Abbildung ist das elastische Material 22 speichenförmig in die Feinabsorptionseinrichtung 15 integriert. Alternativ hierzu kann der Raum auch komplett mit dem elastischen Material 22 ausgefüllt werden, wie die Teilseite 26 zeigt. In Weiterbildung der Erfindung kann das elastische Material 22 einschichtig oder mehrschichtig, punktförmig oder ringförmig angeordnet sein. Ebenso können unterschiedliche Armierungen eingelegt werden. In Abhängigkeit hiervon verändern sich die Elastizitätseigenschaften.
Die zugrundeliegende erfindungsgemäße Feinabsorptionseinrichtung 15 kann zudem durch eine weitere Grobabsorptionseinrichtung 27 unterstützt werden. Die Grobabsorptionseinrichtung 27 kann beispielsweise durch eine an sich bekannte Einrichtung 13 entsprechend der in der deutschen Patentanmeldung DE 19844894 beschriebenen Art gebildet werden, die die stärkeren Rückschläge, die aufgrund fester Fremdkörper auftreten, abfängt. Hierdurch erfolgt ausschließlich eine Grobanpassung an hohe Durchsatzschwankungen. Neben dem eigentlichen Abfangen der Stöße erfüllt die zweite Grobabsorptionseinrichtung 27 die Aufgabe die Feinabsorptionseinrichtung 15 zu schonen.

Die Erfindung ist nicht auf das beschriebene Ausführungsbeispiel beschränkt, sondern kann an beliebig ausgeführten Erntegutbearbeitungs- und Fördereinrichtungen 4, 28 eingesetzt werden, um die beschriebenen Effekte zu erzielen.

### Bezugszeichenliste

- 1: Förderkanal
- 2: Einzugs- und Vorpresswalzen
- 3: Häckseltrommel
- 4: Corn - Cräcker Walze
- 5: Verschwenkbare Corn - Cräckerwalze
- 6: Schwingen
- 7: Gehäuse
- 8: Achse
- 9: Zugstange
- 10: Zugfeder
- 11: Durchgangsspalt
- 12: Stößel
- 13: Einrichtung
- 14: Antriebswelle
- 15: Feinabsorptionseinrichtung
- 16: Innenfläche Corn - Cräcker Mantel
- 17: Corn - Cräckermantel
- 18: Klemmelement
- 19: Innenring
- 20: Außenring
- 21: Dämpfungselement
- 22: Elastisches Material
- 24: Walzenkorpus
- 25: Teilseite der Feinabsorptionseinrichtung
- 26: Teilseite der Feinabsorptionseinrichtung
- 27: Grobabsorptionseinrichtung
- 28: Erntegutbearbeitungseinrichtung
- 29: Endbereich der Antriebswelle
- 30: Lagerstelle

## Patentansprüche

1. Einrichtung an einer landwirtschaftlichen Erntemaschine zum Absorbieren von auftretenden Schwingungen an zusammenwirkenden Erntegutbearbeitungs- und/oder Fördereinrichtungen (2, 5, 28) innerhalb einer Förderstrecke (1), wobei die Erntegutbearbeitungs- und/oder Fördereinrichtungen (2, 5, 28) auf zumindest einer Antriebswelle (14) gelagert und teilweise von wenigstens einem Walzenmantel (17) umgeben sind,
**dadurch gekennzeichnet, dass**
der wenigstens einen Erntegutbearbeitungs- und/oder Fördereinrichtung (2, 5, 28) zumindest eine Feinabsorptionseinrichtung (15) zugeordnet ist.

2. Einrichtung nach Anspruch 1,
**dadurch gekennzeichnet, dass**
die Feinabsorptionseinrichtung (15) einerseits die Antriebswelle (14) der Erntegutbearbeitungs- und/oder Fördereinrichtung (2, 5, 28) an mindestens einer Stelle umschließt und andererseits mit der Innenfläche (16) des Walzenmantels (17) verbunden ist.

3. Einrichtung nach einem oder mehreren der vorangegangenen Ansprüche,
**dadurch gekennzeichnet, dass**
die Feinabsorptionseinrichtung (15) in Abhängigkeit von der Dichte und/oder Struktur des Erntegutstroms und/oder des Durchsatzes die Verstellung der Erntegutbearbeitungs- und/oder Fördereinrichtung (2, 5, 28) vornimmt.

4. Einrichtung nach einem oder mehreren der vorangegangenen Ansprüche,
**dadurch gekennzeichnet, dass**
die Verstellung der Erntegutbearbeitungs- und/oder Fördereinrichtung (2, 5, 28) selbsttätig erfolgt.

5. Einrichtung nach Anspruch 1,
**dadurch gekennzeichnet, dass**
die Feinabsorptionseinrichtung (15) durch wenigstens ein Dämpfungselement (21) gebildet wird.

6. Einrichtung nach einem oder mehreren der vorangegangenen Ansprüche,
**dadurch gekennzeichnet, dass**
das wenigstens eine Dämpfungselement (21) aus elastischem Material (22) besteht.

7. Einrichtung nach einem oder mehreren der vorangegangenen Ansprüche,
**dadurch gekennzeichnet, dass**
durch Belastung des Dämpfungselements (21) der Durchgangsspalt (11) verändert wird.

8. Einrichtung nach einem oder mehreren der vorangegangenen Ansprüche,
**dadurch gekennzeichnet, dass**
das elastische Material (22) aus unterschiedlichen Kunststoffarten und Armierungen besteht.

9. Einrichtung nach einem oder mehreren der vorangegangenen Ansprüche,
**dadurch gekennzeichnet, dass**
das wenigstens eine Dämpfungselement (21) ringförmig ausgebildet ist.

10. Einrichtung nach einem oder mehreren der vorangegangenen Ansprüche,
**dadurch gekennzeichnet, dass**
das wenigstens eine Dämpfungselement (21) einteilig oder mehrteilig ausgebildet ist.

11. Einrichtung nach einem oder mehreren der vorangegangenen Ansprüche,
**dadurch gekennzeichnet, dass**
das wenigstens eine Dämpfungselement (21) zwischen Antriebswelle (14) und Walzenmantel (17) zwischengeschaltet ist.

12. Einrichtung nach einem oder mehreren der vorangegangenen Ansprüche,
**dadurch gekennzeichnet, dass**
zwischen Antriebswelle (14) und Walzenmantel (17) lösbare starre Verbindungselemente vorhanden sind, die gegen elastische formgleiche Dämpfungselemente (21) austauschbar sind.

13. Einrichtung nach einem oder mehreren der vorangegangenen Ansprüche,
**dadurch gekennzeichnet, dass**
das wenigstens eine Dämpfungselement (21) in wenigstens eine Versteifungsstrebe integriert ist.

14. Einrichtung nach einem oder mehreren der vorangegangenen Ansprüche,
**dadurch gekennzeichnet, dass**
die Erntegutbearbeitungs- und/oder Fördereinrichtung (2, 5, 28) aus wenigstens paarweise zusammenarbeitenden Förder- und/oder Bearbeitungswalzen (2, 4, 5) gebildet wird.

15. Einrichtung nach einem oder mehreren der vorangegangenen Ansprüche,
**dadurch gekennzeichnet, dass**
zumindest einer der Förder- und/oder Bearbeitungswalzen (2, 4, 5) wenigstens eine Feinabsorptionseinrichtung (15) zugeordnet ist.

16. Einrichtung nach einem oder mehreren der vorangegangenen Ansprüche,
**dadurch gekennzeichnet, dass**
wenigstens einer Förder- und/oder Bearbeitungswalze (2, 4, 5) zumindest eine weitere Grobabsorptionseinrichtung (27) zugeordnet ist.

17. Einrichtung nach einem oder mehreren der vorangegangenen Ansprüche,
**dadurch gekennzeichnet, dass**
die Feinabsorptionseinrichtung (15) im Bereich der Enden (29) der Antriebswelle (14) zwischen den Lagerstellen (30) der Erntegutbearbeitungs- und/oder Fördereinrichtung (2, 5, 28) und den Gehäusewandungen (7) der Erntegutbearbeitungs- und/oder Fördereinrichtung (2, 5, 28) angeordnet ist.

## Claims

1. A device on an agricultural harvester for absorbing vibrations which occur at co-operating crop material-processing and/or conveying devices (2, 5, 28) within a conveyor section (1), wherein the crop material-processing and/or conveying devices (2, 5, 28) are mounted on at least one drive shaft (14) and are partially surrounded by at least one roller casing (17),
**characterised in that**
at least one fine absorption device (15) is associated with the at least one crop material-processing and/or conveying device (2, 5, 28).

2. A device according to claim 1 **characterised in that** the fine absorption device (15) on the one hand surrounds the drive shaft (14) of the crop material-processing and/or conveying device (2, 5, 28) at at least one location and on the other hand is connected to the inside surface (16) of the roller casing (17).

3. A device according to one or more of the preceding claims **characterised in that** the fine absorption device (15) effects adjustment of the crop material-processing and/or conveying device (2, 5, 28) in dependence on the density and/or the structure of the crop material flow and/or the through-put.

4. A device according to one or more of the preceding claims **characterised in that** the adjustment of the crop material-processing and/or conveying device (2, 5, 28) is effected automatically.

5. A device according to claim 1 **characterised in that** fine absorption device (15) is formed by at least one damping element (21).

6. A device according to one or more of the preceding claims **characterised in that** the at least one damping element (21) comprises elastic material (22).

7. A device according to one or more of the preceding claims **characterised in that** the passage gap (11) is altered by the loading of the damping element (21).

8. A device according to one or more of the preceding claims **characterised in that** the elastic material (22) comprises different kinds of plastic materials and reinforcements.

9. A device according to one or more of the preceding claims **characterised in that** the at least one damping element (21) is of an annular configuration.

10. A device according to one or more of the preceding claims **characterised in that** the at least one damping element (21) is of a one-part or multi-part configuration.

11. A device according to one or more of the preceding claims **characterised in that** the at least one damping element (21) is interposed between the drive shaft (14) and the roller casing (17).

12. A device according to one or more of the preceding claims **characterised in that** between the drive shaft (14) and the roller casing (17) are releasable rigid connecting elements which are replaceable by elastic damping elements (21) of the same shape.

13. A device according to one or more of the preceding claims **characterised in that** the at least one damping element (21) is integrated in at least one stiffening strut.

14. A device according to one or more of the preceding claims **characterised in that** the crop material-processing and/or conveying device (2, 5, 28) is formed from conveyor and/or processing rollers (2, 4, 5) co-operating at least in paired relationship.

15. A device according to one or more of the preceding claims **characterised in that** at least one fine absorption device (15) is associated with at least one of the conveyor and/or processing rollers (2, 4, 5).

16. A device according to one or more of the preceding claims **characterised in that** at least one further coarse absorption device (27) is associated with at least one conveyor and/or processing roller (2, 4, 5).

17. A device according to one or more of the preceding claims **characterised in that** the fine absorption device (15) is arranged in the region of the ends (29) of the drive shaft (14) between the mounting locations (30) of the crop material-processing and/or conveying device (2, 5, 28) and the housing walls (7) of the crop material-processing and/or conveying device (2, 5, 28).

## Revendications

1. Dispositif sur une machine agricole de récolte pour absorber des vibrations survenant sur des dispositifs conjugués de traitement et/ou d'amenée de produit récolté (2, 5, 28) à l'intérieur d'un trajet d'amenée (1), les dispositifs de traitement et/ou d'amenée de produit récolté (2, 5, 28) étant montés sur au moins un arbre d'entraînement (14) et partiellement entourés par au moins un bandage de cylindre (17), **caractérisé en ce qu'**au moins un dispositif d'absorption fine (15) est associé au dispositif de traitement et/ou d'amenée de produit récolté (2, 5, 28) au nombre d'au moins un.

2. Dispositif selon la revendication 1, **caractérisé en ce que** le dispositif d'absorption fine (15), d'une part, entoure l'arbre d'entraînement (14) du dispositif de traitement et/ou d'amenée de produit récolté (2, 5, 28) en au moins un endroit et, d'autre part, est relié à la surface intérieure (16) du bandage de cylindre (17).

3. Dispositif selon une ou plusieurs des revendications précédentes, **caractérisé en ce que** le dispositif d'absorption fine (15) procède au déplacement du dispositif de traitement et/ou d'amenée de produit récolté (2, 5, 28) en fonction de la densité et/ou de la structure du flux de produit récolté et/ou du débit.

4. Dispositif selon une ou plusieurs des revendications précédentes, **caractérisé en ce que** le déplacement du dispositif de traitement et/ou d'amenée de produit récolté (2, 5, 28) s'effectue automatiquement.

5. Dispositif selon la revendication 1, **caractérisé en ce que** le dispositif d'absorption fine (15) est formé par au moins un élément amortisseur (21).

6. Dispositif selon une ou plusieurs des revendications précédentes, **caractérisé en ce que** l'élément amortisseur (21) au nombre d'au moins un est constitué de matériau élastique (22).

7. Dispositif selon une ou plusieurs des revendications précédentes, **caractérisé en ce que** la mise en charge de l'élément amortisseur (21) a pour effet de modifier l'intervalle de passage (11).

8. Dispositif selon une ou plusieurs des revendications précédentes, **caractérisé en ce que** le matériau élastique (22) est constitué de divers types de matières synthétiques et d'armatures.

9. Dispositif selon une ou plusieurs des revendications précédentes, **caractérisé en ce que** l'élément amortisseur (21) au nombre d'au moins un est de forme annulaire.

10. Dispositif selon une ou plusieurs des revendications précédentes, **caractérisé en ce que** l'élément amortisseur (21) au nombre d'au moins un est conçu en une ou plusieurs parties.

11. Dispositif selon une ou plusieurs des revendications précédentes, **caractérisé en ce que** l'élément amortisseur (21) au nombre d'au moins un est intercalé entre l'arbre d'entraînement (14 )et le bandage de cylindre (17).

12. Dispositif selon une ou plusieurs des revendications précédentes, **caractérisé en ce qu'**entre l'arbre d'entraînement (14) et le bandage de cylindre (17) sont prévus des éléments de liaison rigides détachables qui sont remplaçables par des éléments amortisseurs élastiques de forme identique (21).

13. Dispositif selon une ou plusieurs des revendications précédentes, **caractérisé en ce que** l'élément amortisseur (21) au nombre d'au moins un est intégré à au moins une entretoise de renfort.

14. Dispositif selon une ou plusieurs des revendications précédentes, **caractérisé en ce que** le dispositif de traitement et/ou d'amenée de produit récolté (2, 5, 28) est formé de cylindres d'amenée et/ou de traitement (2, 4, 5) coopérant au moins par paires.

15. Dispositif selon une ou plusieurs des revendications précédentes, **caractérisé en ce qu'**au moins un dispositif d'absorption fine (15) est associé à au moins un des cylindres d'amenée et/ou de traitement (2, 4, 5) .

16. Dispositif selon une ou plusieurs des revendications précédentes, **caractérisé en ce qu'**au moins un dispositif supplémentaire d'absorption sommaire (27) est associé à au moins un cylindre d'amenée et/ou de traitement (2, 4, 5).

17. Dispositif selon une ou plusieurs des revendications précédentes, **caractérisé en ce que** le dispositif d'absorption fine (15) est disposé dans la zone des extrémités (29) de l'arbre d'entraînement (14) entre les points d'appui (30) du dispositif de traitement et/ou d'amenée de produit récolté (2, 5, 28) et les parois de carter (7) du dispositif de traitement et/ou d'amenée de produit récolté (2, 5, 28).
